# EUROPEAN PATENT APPLICATION

(11) **EP 1 998 055 A1**
(43) Date of publication of application: **03.12.2008**
(21) Application number: 07730490.5
(22) Date of filing: 14.03.2007
(51) Int. Cl.: F16B 9/02, F16B 17/00

(54) **DEVICE FOR ANCHORING BETWEEN TWO PIECES OF DIFFERENT MATERIAL**

(30) Priority: 14.03.2006 ES 200600653
(71) Applicant: Altuna Vidaurre, Ignacio, 39310 Miengo Cantabria (ES)
(72) Inventor: Altuna Vidaurre, Ignacio, 39310 Miengo Cantabria (ES)
(74) Representative: Urizar Anasagasti, Jesus Maria
(86) International application number: PCT/ES2007/070050
(87) International publication number: WO 2007/104819

(57) **Abstract**

Device for anchoring between two pieces of different material, in particular a rigid piece (1) and another, flexible piece (2). The rigid piece has a frustoconical housing (11) that receives a termination of the flexible piece (2), which transversely has a recess (21) into which an arm (4) of rigid material is inserted. Said arm (4) has a threaded hole (41) corresponding with an axial hole (22) in the flexible piece and in the base of the housing (11) of the rigid piece (1), via which an Allen-type or similar self-locking screw (3) passes, pulling together all the pieces involved in the anchoring operation and at the same time embedding the flexible material (2) inside the frustoconical core of the rigid material (1).

## Description

### Object of the Invention

The present invention relates to an anchoring between two pieces, which intends to overcome the drawbacks of a rigid attachment and/or anchoring (metal, concrete, polymer, ceramic, etc.) on a flexible element, even if it is fibrous (plastic, rubber, wood, etc), achieving a technical unit preventing or delaying clearances and fractures which occur over time and/or with use and which ruin the initial expectations of firmness of said attachment.

### Background of the Invention

There are many types of anchorings between pieces, in particular between rigid pieces, by means of bolts, screws or equivalent solutions. The problem occurs when one of the two pieces to be attached is not rigid, but rather it is flexible or of a fibrous material such as plastic or wood; in these cases the attachment tends to break due to the difference itself of the materials.

### Description of the Invention

As its name indicates, the proposed attachment or anchoring basically consists of an anchor; this term is used due to the similarity to its maritime predecessor, which mechanically adheres the materials without breaking them and makes them work together without any of them losing its initial properties.

The device in question is made of two elements, the shaft and the arms.

The shaft is a self-locking screw, which can be of the Allen-type or the like, of a rigid material, preferably steel, which is supported on the rigid material and pulls the arms embedded in the flexible material; the latter being the only piece of a perforated rigid material in which the shaft, the self-locking screw, carries out its grip; the piece called arms has any shape, with a straight directrix.

To support the anchor, a cylindrical perforation, where the shaft (screw) will penetrate, and another perpendicular perforation, where the arms will be housed, are made in the flexible element. Any or both perforations can be lined by means of a rigid tube to reinforce and/or better adjust the flexible material to the anchor.

It is important for the contact between the pieces to be attached to be a frustoconical surface in order to make the maximum use of the properties of the materials and the pulling carried out by the anchor.

### Description of the Drawings

To complement the description which is being made and for the purpose of aiding to better understand the features of the invention, a set of drawings is attached to this specification in which the following has been shown with an illustrative and non-limiting character:

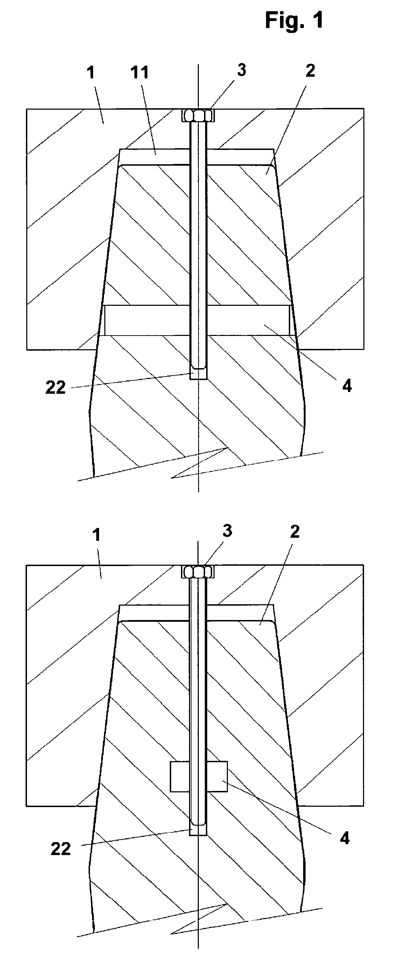

Figure 1 shows two sections by the axis of the attachment, the upper section parallel to the directrix of the arms and the second section perpendicular to said directrix.

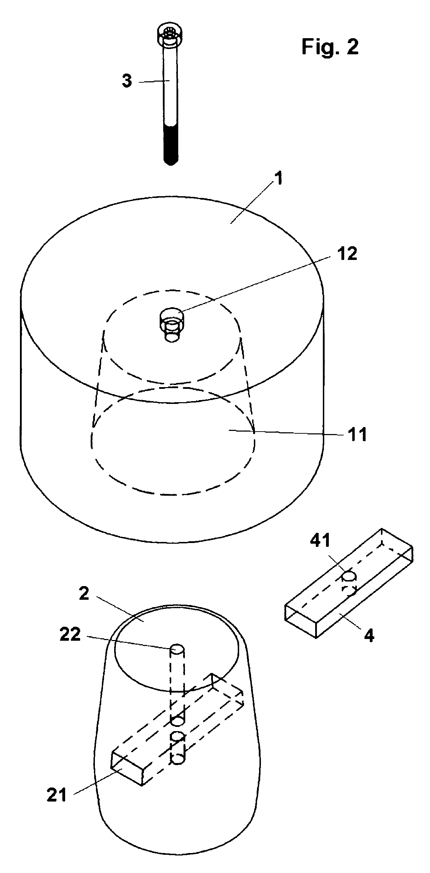

Figure 2 shows an exploded perspective view of the device aligned in the execution order.

### Preferred Embodiment of the Invention

The device for anchoring between two pieces of different material shown in the figures provides a frustoconical housing (11) made in the rigid piece (1), that receives a termination of the flexible piece (2), which transversely has a recess (21) into which an arm (4) of rigid material is inserted, which arm has a threaded hole (41) corresponding with an axial hole (22) in the flexible piece and in the base of the housing (11) of the rigid piece (1). A self-locking screw (3) passes through said hole, which screw is supported on the rigid material (1), penetrates the flexible material (2) and is screwed in the piece (4) housed inside the flexible material (2), anchoring all the parts involved.

As can be observed in the referenced figures, when the arms (4) embedded in the flexible material (2) are pulled, it causes the latter, the flexible material, to be compressed inside the frustoconical cavity (11) of the rigid material (1), achieving the desired fixing and with the following advantages, on one hand, the dimensional stability which it requires for the non-generation of clearances and on the other hand, a sufficient compression in the flexible material to prevent tears in the event of the dynamic use of the system.

Having sufficiently described the nature of the invention as well as a preferred embodiment, it is stated for the relevant purposes that the materials, shape, size and arrangement of the described elements can be modified, provided that this does not involve an alteration of the essential features of the invention which are claimed below:

## Claims

1. A device for anchoring between two pieces of different material, in particular a rigid piece (1) and another flexible piece (2), **characterized in that** there is provided a frustoconical housing (11) made in the rigid piece that receives a termination of the flexible piece (2), which transversely has a recess (21) into which an arm (4) of rigid material is inserted, which arm has a threaded hole (41) corresponding with an axial hole (22) in the flexible piece and in the base of the housing (11) of the rigid piece (1), through which a self-locking screw (3) passes, which screw is supported on the rigid material (1), penetrates the flexible material (2) and is screwed in the piece (4) housed inside the flexible material (2), pulling together all the pieces involved in the anchoring operation and at the same time embedding the flexible material (2) inside the frustoconical core of the rigid material (1).
